# EUROPÄISCHE PATENTSCHRIFT

(11) **EP 2 553 782 B1**
(45) Veröffentlichungstag und Bekanntmachung des Hinweises auf die Patenterteilung: **03.06.2015**
(21) Anmeldenummer: 11709051.4
(22) Anmeldetag: 04.03.2011
(51) Int. Cl.: H02B 1/56

(54) **HEIZEINRICHTUNG FÜR DEN EINBAU IN EINEN SCHALTSCHRANK**
HEATING DEVICE FOR INSTALLATION IN AN ELECTRICAL CABINET
DISPOSITIF DE CHAUFFAGE À MONTER DANS UNE ARMOIRE ÉLECTRIQUE

(30) Priorität: 29.03.2010 DE 102010016177
(43) Veröffentlichungstag der Anmeldung: 06.02.2013
(73) Patentinhaber: Rittal GmbH & Co. KG, 35745 Herborn (DE)
(72) Erfinder: BRAUN, Rüdiger, 35716 Dietzhölztal (DE); LOH, Friedhelm, 35716 Dietzhölztal (DE)
(74) Vertreter: Angerhausen, Christoph
(86) Internationale Anmeldenummer: PCT/EP2011/053260
(87) Internationale Veröffentlichungsnummer: WO 2011/120759

(56) Entgegenhaltungen:
- EP-A1- 0 002 660
- DE-U1- 9 217 778
- GB-A- 2 140 260
- US-A1- 2005 006 053

## Beschreibung

Die Erfindung betrifft eine Heizeinrichtung für den Einbau in einen Schaltschrank mit einem Träger und einem Heizkörper, wobei der Träger den Heizkörper in einer Aufnahme auswechselbar aufnimmt, gemäß dem Oberbegriff von Anspruch 1.

Solche Heizeinrichtungen werden insbesondere verwendet, wenn Schaltschränke im Außenbereich aufgestellt werden. Abhängig von den Witterungsverhältnissen kann es für den zuverlässigen Betrieb der im Schaltschrank untergebrachten Elektronik erforderlich sein, das thermische Niveau anzuheben, wozu die Heizeinrichtungen genutzt werden. Ein weiterer Anwendungsfall ergibt sich dann, wenn die Gefahr der Kondensatbildung im Schaltschrankinnenraum gegeben ist. Die Heizeinrichtung wird dann so im Schaltschrankinnenraum befestigt, dass die zur Verfügung stehende Heizleistung entsprechend genutzt werden kann.

Für die unterschiedlichen Anwendungsfälle stehen verschiedene Heizelemente mit den jeweils erforderlichen Leistungen zur Verfügung. Die Heizeinrichtungen werden üblicherweise mit Befestigungsklammern an Hutschienen fixiert. Die Befestigungsklammern sind einerseits mit den Heizkörpern verbunden und weisen Schraubaufnahmen auf, mit denen sie mit einer Hutschiene oder einem im Schaltschrank gehaltenen Chassis verschraubt sind.

Derartige Heizeinrichtungen sind aus dem Firmenprospekt "Rittal Handbuch 31, Seiten 654 und 655" bekannt.

Eine Heizeinrichtung gemäß dem Oberbegriff von Anspruch 1 ist aus der US 2005/0006053 A1 bekannt. Ein Träger nimmt einen Heizkörper in einer Aufnahme auswechselbar auf, wobei Begrenzungselemente voneinander beabstandet so angeordnet sind, dass sie Führungsschienen für den Heizkörper bilden. Wenn der Heizkörper vollständig in die Führungsschienen eingeschoben ist, wird er in dieser Position durch Rastelemente verrastet. Die Rastelemente sind in Querrichtung der Begrenzungselemente angeordnet, so dass sie eine Montageendstellung definieren, in der der Heizkörper unverrückbar gehalten wird.

Die EP 0 002 660 A1 offenbart ein Schaltschrank-Heizgerät bestehend aus einer im Querschnitt U-förmigen Grundplatte, das einen Heizkörper mitsamt einem Thermostaten aufnimmt. Die Grundplatte ist mit einem durchgehenden Befestigungsdoppelsteg versehen, in dem eine Einschraubnut gebildet ist, in welche an beliebigen Stellen selbstschneidende Befestigungsschrauben eingeschraubt werden können.

In der DE 92 17 778 U1 ist eine Schaltschrankheizung beschrieben, bei der ein Heizkörper auf ein Thermostatgehäuse aufgeschraubt ist.

Schließlich zeigt auch die GB 2 140 260 A einen Heizkörper, der an einem Träger verschraubbar ist.

Es ist Aufgabe der Erfindung, eine Heizeinrichtung der eingangs erwähnten Art zu schaffen, die schnell und einfach im Schaltschrankinnenraum installiert werden kann und die dabei eine zuverlässige Fixierung des Heizkörpers garantiert.

Diese Aufgabe wird durch eine Heizeinrichtung nach Anspruch 1 gelöst. Die Aufnahme weist eine Auflagefläche auf, welche zwischen zueinander beabstandeten Begrenzungselementen steht, wobei im Bereich der Aufnahme ein oder mehrere Rastelemente vorgesehen sind, die den Heizkörper so in der Aufnahme arretieren, dass die Begrenzungselemente den Heizkörper quer zur Auflageflächenebene formschlüssig fixieren. Die Begrenzungselemente sind im Endbereich der Aufnahme unterbrochen, um die Rastelemente zu bilden. Auf diese Weise entsteht eine in Längsrichtung der Heizkörper geöffnete Geometrie des Trägers, der den Einsatz unterschiedlich langer Heizkörper ermöglicht.

Diese Heizeinrichtung kann derart im Schaltschrankinnenraum montiert werden, dass zunächst der Träger an einer gewünschten Befestigungsstelle, bspw. einer Hutschiene, angekoppelt wird. Anschließend kann das Heizelement in die Aufnahme des Trägers eingesetzt und mit den Rastelementen verrastet werden. Hierdurch wird eine werkzeuglose Montage möglich. Im verrasteten Zustand stützt sich die Heizeinrichtung zum Einen auf der Auflagefläche und zum Anderen an den Begrenzungselementen ab. Hierdurch wird der Heizkörper quer zur Auflageflächenebene formschlüssig zuverlässig gegen Verschiebung gesichert. Über das Rastelement kann eine zuverlässige Fixierung des Heizelementes bewirkt werden.

Da im Bereich der Aufnahme ein Halter angeordnet ist, der eine im Winkel zur Auflagefläche angestellte Führungsschräge aufweist, die den Heizkörper bei der Montage in die Aufnahme führt, dann kann der Heizkörper bei der Montage schräg in die Aufnahme eingesetzt werden, wobei die Führungsschräge diese Einsetzbewegung leitet. Anschließend wird der Heizkörper in die Aufnahme eingeschwenkt, wobei er mit den Rastelementen verrastet. Diese Montage ist eindeutig und einfach durchführbar.

Eine mögliche Erfindungsvariante ist derart, dass das Rastelement den Heizkörper senkrecht zur Auflagefläche formschlüssig festlegt. Weiter ist es vorgesehen, dass die Aufnahme einen Vorsprung aufweist, der in eine Aussparung des Heizkörpers eingreift. Eine Variante kann dabei sein, dass das Rastelement in eine Aussparung des Heizkörpers eingreift.

Gemäß einer bevorzugten Erfindungsausgestaltung kann es vorgesehen sein, dass die Aufnahme eine Schnittstelle für unterschiedlich lange, als Profilabschnitte ausgebildete Heizkörper aufweist. Damit wird dem Anwender ein Bausatz zur Verfügung gestellt, bei dem an einem Träger Heizkörper mit unterschiedlicher Heizleistung wahlweise befestigt werden können. Dabei sind die Heizkörper kostengünstig als Profilabschnitte von einem Halbzeug in unterschiedlichen Längen ablängbar.

Die Begrenzungselemente können insbesondere als zueinander parallele Stege ausgebildet sein, an denen der Kühlkörper mit angeformten Befestigungsleisten anliegt. Hierdurch lässt sich der Teileaufwand weiter verringern.

Bei einer erfindungsgemäßen Heizeinrichtung können die Rastelemente derart angeordnet sein, dass sie mit der als Wärmetauscherrippe ausgebildeten einteilig an den Heizkörper angeformten Befestigungsleiste verrastet sind. Hierdurch wird zum Einen der Teileaufwand reduziert. Zum Anderen ist der Heizkörper wirkungsgradoptimiert ausgelegt, denn auch über die Befestigungsleisten lässt sich Wärmeenergie abtauschen.

Eine denkbare Erfindungsvariante ist derart, dass an die Aufnahme zwei Ansätze anschließen, die zueinander beabstandet sind, und einen Kabelkanal begrenzen, dass der Kabelkanal Zugang zu einem elektrischen Anschluss des Heizkörpers schafft, und dass einer oder beide Ansätze einen Luftführungskanal umschließen, der mit einem Luftführungsbereich des Heizkörpers in räumlicher Verbindung steht. Die beiden Ansätze dienen damit zum Einen dazu, den elektrischen Anschluss des Heizkörpers abzuschirmen. Zum Anderen stellen die Ansätze den Luftführungskanal zur Verfügung, um eine zielgerichtete Luftströmung zu den Luftführungsbereichen des Heizkörpers zu ermöglichen.

Der Kabelkanal kann mittels einer abnehmbaren Abdeckung verschließbar sein, die mit dem Träger montagefreundlich verrastet ist. Bei abgenommener Abdeckung ist der elektrische Anschluss des Heizelementes zu Installationszwecken einfach zugänglich.

Eine besonders bevorzugte Erfindungsvariante ist derart, dass der Heizkörper als Strangpressprofil mit einteilig angeformten Wärmetauscherrippen ausgebildet ist, und dass der Heizkörper ein Basisteil mit einer Heizelementaufnahme aufweist, in die ein Heizelement eingesetzt ist. Hierdurch ergibt sich eine besonders einfache und kostengünstig zu fertigende Bauweise für den Heizkörper. Insbesondere kann der Heizkörper aus einem Aluminium-Strangpressprofil gebildet sein, das gute Wärmetauscheigenschaften garantiert. Das Heizelement lässt sich in die Heizelementaufnahme einpressen, um dadurch einen guten Wärmeübergang zwischen dem Heizkörper und dem Heizelement zu ermöglichen.

Die Erfindung wird im Folgenden anhand eines in den Zeichnungen dargestellten Ausführungsbeispieles näher erläutert. Es zeigen:
Figur 1 in perspektivischer Frontansicht einen Träger;
Figur 2 einen Heizkörper in perspektivischer Seitenansicht;
Figur 3 in perspektivischer Frontansicht eine weitere Ausgestaltungsvariante eines Trägers;
Figuren 4 und 5 einen Heizkörper in verschiedenen Ansichten; und
Figur 6 eine weitere Ausgestaltungsvariante eines Heizkörpers in Frontansicht.

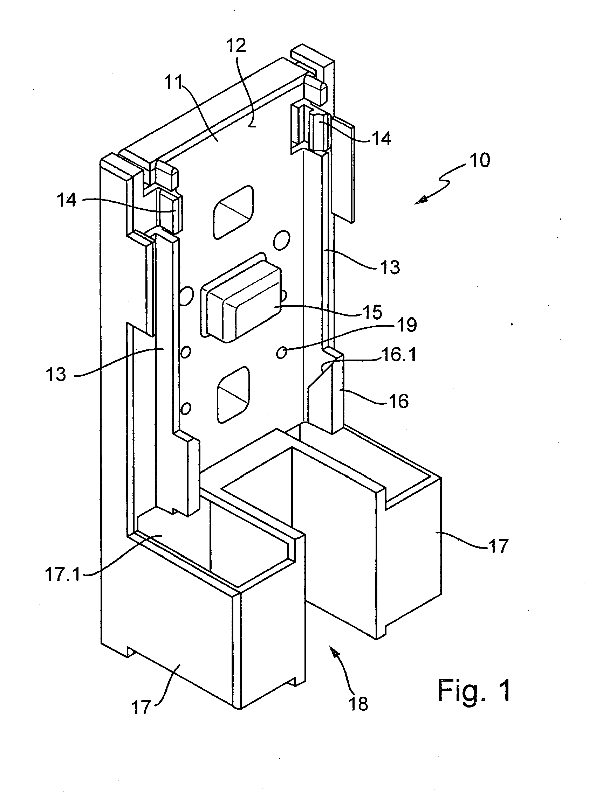

Figur 1 zeigt einen Träger 10, der als Kunststoff-Spritzgussteil ausgebildet ist. Er weist eine Aufnahme 11 auf, die eine Auflagefläche 12 besitzt. Im Zentrum der Auflagefläche 12 erhebt sich ein, im Querschnitt rechteckförmiger Vorsprung 15 über die Auflageflächenebene. In die Auflagefläche 12 sind Bohrungen 19 eingebracht, die Zugang zur Rückseite des Trägers 10 schaffen. Durch die Bohrungen 19 können Befestigungsschrauben hindurchgeführt werden, die zur Ankopplung an einen Halter 16 im Schaltschrankinnenraum dienen. Bspw. kann als Halter 16 eine Hutschiene oder ein Montagechassis verwendet sein.

Die Auflagefläche 12 ist beidseitig von zwei Begrenzungselementen 13 eingefasst. Dabei sind die Begrenzungselemente 13 als rippenförmige Stege ausgebildet, die zueinander parallel beabstandet sind. Diese Begrenzungselemente 13 sind im Endbereich der Auflagefläche 12 derart unterbrochen, dass Rastelemente 14 gebildet sind. Die Rastelemente 14 sind federelastisch an den Träger 10 einteilig angekoppelt. Sie weisen eine geneigte Auslenkschräge auf, die in eine steile, parallel zur Auflagefläche 12 angeordnete Rastfläche übergeht.

Den Rastelementen 14 abgekehrt sind an die Begrenzungselemente 13 Halter 16 angeschlossen. Die Halter 16 sind derart ausgeformt, dass sie in Richtung der Ebene der Auflagefläche 12 über die Begrenzungselemente 13 hervorstehen. Auf diese Weise wird ein Hinterschnitt gebildet. Der Hinterschnitt geht in eine Führungsschräge 16.1 über, die im Winkel < 90° zur Auflageflächenebene steht. An dem den Rastelementen 14 abgewandten Ende der Auflagefläche 12 sind zwei Ansätze 17 an den Träger 10 angeformt. Die Ansätze 17 sind zueinander derart beabstandet angeordnet, dass sie seitlich einen Kabelkanal 18 begrenzen. Jeder der Ansätze 17 umschließt einen Luftführungskanal 17.1. Der Luftführungskanal 17.1 ist zum Einen in Richtung zur Längserstreckung der Auflagefläche 12 hin geöffnet. Zum Anderen ist der Luftführungskanal 17.1 zu der Rückseite des Trägers 10 hin geöffnet, wie dies die Figur 1 deutlich erkennen lässt. Weiterhin ist der Luftführungskanal 17.1 aber auch an der in Figur 1 unten liegenden Unterseite geöffnet.

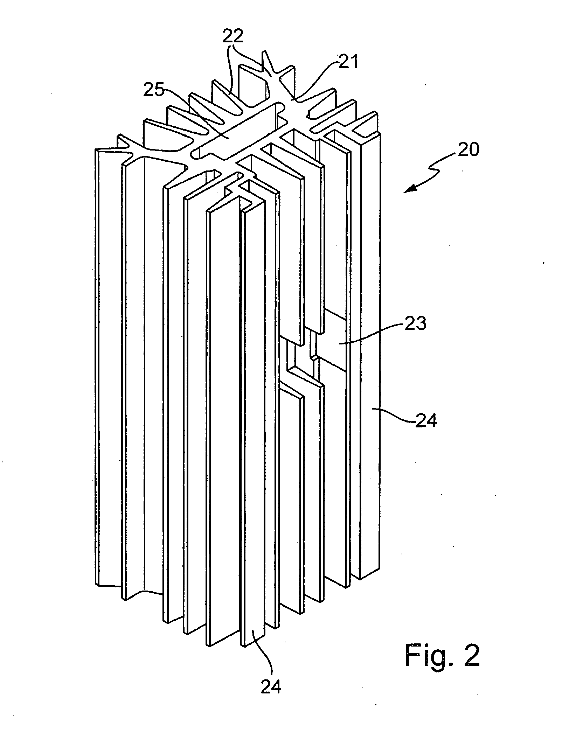

Figur 2 zeigt einen Heizkörper 20, der an den Träger 10 montiert werden kann. Der Heizkörper 20 ist als Aluminium-Strangpressprofilabschnitt ausgebildet. Er weist ein Basisteil 21 auf, an das einteilig Wärmetauscherrippen 22 angeformt sind. Das Basisteil 21 ist von einer Heizelementaufnahme 25 durchdrungen, die als durchgehende Ausnehmung in Längserstreckung des Heizkörpers 20 verläuft. An seiner Unterseite sind die Wärmetauscherrippen 22 des Heizkörpers 20 derart ausgebildet, dass sie seitlich abstehende Befestigungsleisten 24 bilden. Zwischen den Befestigungsleisten 24 ist eine Aussparung 23 in Form einer Ausfräsung in den Heizkörper 20 eingearbeitet. Dabei ist diese Aussparung 23 derart dimensioniert, dass der Vorsprung 15 des Trägers 10 darin Platz finden kann. In die Heizelementaufnahme 25 kann ein, in der Figur 2 nicht dargestelltes elektrisches Heizelement eingepresst werden. Dieser Einpressvorgang ist so gestaltet, dass Wärmeübertragungsflächen des Heizelementes in unmittelbarem Kontakt mit Begrenzungsflächen der Heizelementaufnahme 25 stehen, sodass ein guter Wärmeübergang gewährleistet ist.

Für die Montage des Heizelementes 20 werden die Befestigungsleisten 24 an die Führungsschrägen 16.1 der Halter 16 angesetzt. Dabei steht die Mittellängsachse des Heizkörpers 20 im Winkel < 90° zu der Ebene der Auflagefläche 12.

Der Heizkörper 20 kann so in die Aufnahme 11 eingesetzt werden, dass die Befestigungsleisten 24 an den Führungsschrägen 16.1 vorbei gleiten, bis sie den Bereich des Hinterschnittes der Halter 16 erreichen. Dann lässt sich der Heizkörper 20 abklappen, bis seine Mittellängsachse parallel zur Auflagefläche 12 steht. Bei diesem Abklappen greift der Vorsprung 15 in die Aussparung 23 ein. Gleichzeitig gelangen die Rastelemente 14 mit ihren Auslenkschrägen an die Befestigungsleisten 24. Die federelastisch aufgehangenen Rastelemente 14 werden dann in einander entgegengesetzte Richtungen ausgelenkt, bis die Befestigungsleisten 24 an den Auslenkschrägen vorbei geführt sind. Die Rastelemente 14 schnappen dann nach Innen, wobei die Rastflächen der Rastelemente 14 die Befestigungsleisten 24 hintergreifen. Der Heizkörper 20 ist dann in Querrichtung formschlüssig an den Begrenzungselementen 13 festgelegt. In Richtung der Längserstreckung der Begrenzungselemente 13 wird der Heizkörper 20 an dem Vorsprung 15 formschlüssig gehalten. Senkrecht zur Auflagefläche 12 ist ein Versatz des Heizkörpers 20 durch die Rastelemente 14 und den Hinterschnitt der Halter 16 verhindert. Auf diese Weise ist der Heizkörper 20 zuverlässig am Träger 10 fixiert.

Der elektrische Anschluss des Heizelementes ist im Montagezustand des Heizkörpers 20 im Bereich des Kabelkanals 18 gehalten. Damit kann der elektrische Anschluss auf einfache Weise hergestellt werden. Der Kabelkanal 18 kann mit einer (nicht dargestellten) Abdeckung abschließend überdeckt werden.

Während des Betriebseinsatzes überträgt das Heizelement seine Heizleistung auf den Heizkörper 20. Diese Heizleistung wird an den Wärmetauscherrippen 22 hauptsächlich über Konvektionsvorgänge in den Schaltschrankinnenraum abgetauscht. Diese Konvektion wird durch die Luftführungskanäle 17.1 kaminartig unterstützt.

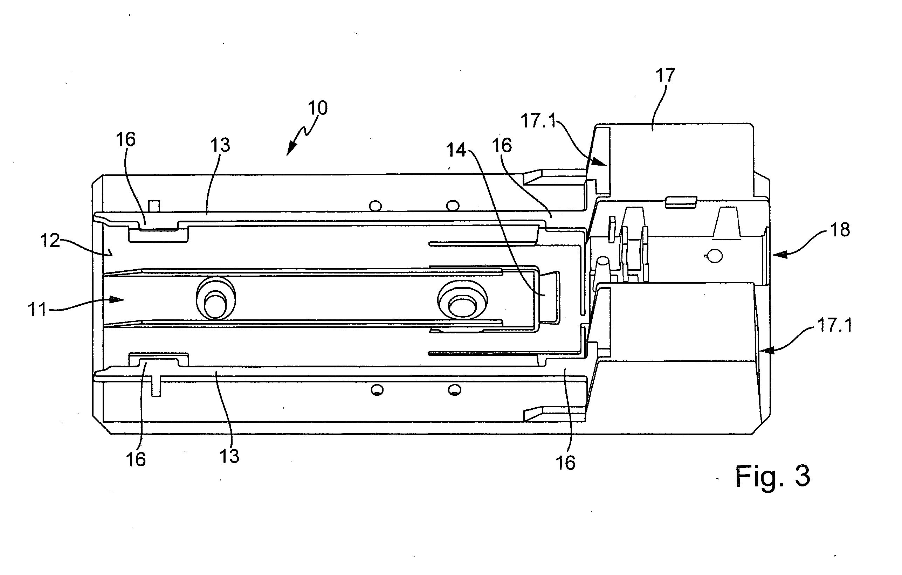

Figur 3 zeigt eine weitere Ausgestaltungsvariante eines Trägers 10. Dieser Träger 10 entspricht in wesentlichen Ausgestaltungsmerkmalen dem Träger 10 gemäß Figur 1. Insbesondere weist er eine Aufnahme 11 mit einer Auflagefläche 12 auf, die seitlich von den beiden stegartigen Begrenzungselementen 13 begrenzt ist. Weiterhin besitzt der Träger 10 zwei Ansätze 17, die jeweils einen Luftführungskanal 17.1 umschließen und seitlich an einen Kabelkanal 18 anschließen. Auch insofern stimmt der Träger 10 gemäß Figur 3 mit dem Träger 10 gemäß Figur 1 überein, sodass auf die entsprechenden vorstehenden Ausführungen Bezug genommen werden kann.

Bei dem Träger 10 gemäß Figur 3 sind an jedes Begrenzungselement 13 jeweils zwei Halter 16 in Form von Vorsprüngen angeformt. Die Halter 16 der beiden Begrenzungselemente 13 stehen einander paarweise gegenüber und bilden Schiebeführungen für den Heizkörper 20. Im Bereich der beiden Ansätze 17 ist aus der Auflagefläche 12 ein zungenförmiges Federelement freigestellt, das ein Rastelement 14 trägt.

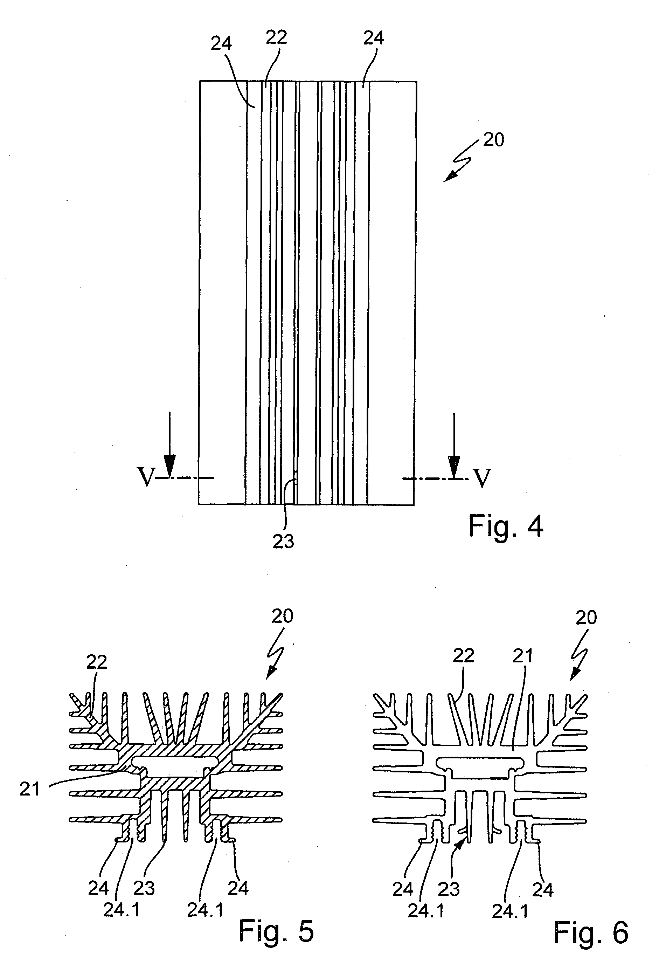

Die Figuren 4 und 5 zeigen eine Ausgestaltungsvariante eines Heizkörpers 20, der zur Montage an dem Träger 10 konfiguriert ist. Der Heizkörper 20 gemäß den Figuren 4 und 5 stimmt im Wesentlichen mit dem Heizkörper gemäß Figur 2 überein.

Im Unterschied zu dem Heizkörper gemäß Figur 2 besitzt der Heizkörper 20 gemäß Figur 4 und 5 eine Aussparung 23, die im Bereich einer Stirnseite des Heizkörpers 20 angeordnet ist. Diese Aussparung 23 dient als Rastaufnahme für das Rastelement 14 des Trägers 10. Zur Montage des Heizkörpers 20 wird dieser mit Befestigungsleisten 24 auf das den Ansätzen 17 abgewandte Ende der Auflagefläche 12 aufgesetzt. Nun kann der Heizkörper 20 auf der Auflagefläche 12 verschoben werden, wobei die Befestigungsleisten 24 unter den Haltern 16 durchfahren. Die Halter 16 verhindern somit ein Abheben des Heizkörpers 20 senkrecht zur Auflagefläche 12. Während des Einschiebvorganges des Heizkörpers 20 trifft das stirnseitige Ende des Heizkörpers 20, das die Aussparung 23 aufweist, auf das Rastelement 14. Dabei wird der zungenförmige Ansatz des Rastelementes 14 nach unten ausgelenkt. Dieser Auslenkvorgang wird durch eine Auflaufschräge, die schräg zur Auflagefläche 12 angeordnet ist, unterstützt. Sobald die Aussparung 23 in den Bereich des Rastelementes 14 gelangt, schnappt dieses in die Aussparung 23 ein und legt den Heizkörper 20 unverschiebbar in Achsrichtung fest. Damit ist der Heizkörper 20 zuverlässig an dem Träger 10 fixiert.

Wie die Figur 5 erkennen lässt, ist die Aussparung 23 in Form einer Ausfräsung ausgebildet.

In Figur 6 ist eine weitere Ausgestaltungsvariante eines Heizkörpers dargestellt. Anstelle der Ausfräsung wird die Aussparung 23 derart erzeugt, dass die Wärmetauscherrippen 22, die letztendlich die Aussparung 23b eingesägt und seitlich abgebogen werden. Dabei werden zwei parallele Schnitte in je eine Wärmetauscherrippe 22 eingebracht, wobei die Schnitte derart voneinander beabstandet sind, dass sich die in Figur 4 angegebene Breite für die Aussparung 23 ergibt.

Wie die Figuren 5 und 6 weiter erkennen lassen, weist jeder Heizkörper 20 jeweils zwei in Längsrichtung verlaufende Schraubkanäle 24.1 auf. Bedarfsweise kann damit der Heizkörper 20 noch zusätzlich mit dem Träger 10 verschraubt werden.

## Patentansprüche

1. Heizeinrichtung für den Einbau in einen Schaltschrank; mit einem Träger (10) und einem Heizkörper (20), wobei der Träger (10) den Heizkörper (20) in einer Aufnahme (11) auswechselbar aufnimmt, die eine Auflagefläche (12) aufweist, welche zwischen zueinander beabstandeten Begrenzungselementen (13) steht, wobei im Bereich der Aufnahme (11) ein oder mehrerer Rastelemente (14) vorgesehen sind, die den Heizkörper (20) so in der Aufnahme arretieren, dass die Begrenzungselemente (13) den Heizkörper (20) quer zur Auflagefläche formschlüssig fixieren,
**dadurch gekennzeichnet, dass**
- die Begrenzungselemente (13) im Endbereich der Auflagefläche (12) unterbrochen sind, um die Rastelemente (14) zu bilden,
- im Bereich der Aufnahme (11) ein Halter (16) angeordnet ist, der eine im Winkel < 90° zur Auflagefläche (12) angestellte Führungsschräge (16.1) aufweist, die den Heizkörper (20) bei der Montage in die Aufnahme (11) führt, und
- die Aufnahme (11) einen Vorsprung (15) aufweist, der in eine Aussparung (23) des Heizkörpers (20) eingreift, oder dass das Rastelement (14) in eine Aussparung (23) des Heizkörpers eingreift.

2. Heizeinrichtung nach Anspruch 1, **dadurch gekennzeichnet, dass** die Aufnahme (11) eine Schnittstelle für unterschiedlich lange, als Profilabschnitte ausgebildete Heizkörper (20) aufweist.

3. Heizeinrichtung nach Anspruch 1 oder 2, **dadurch gekennzeichnet, dass** die Begrenzungselemente (13) als zueinander parallele Stege ausgebildet sind, an denen der Kühlkörper (24) mit angeformten Befestigungsleisten anliegt.

4. Heizeinrichtung nach einem der Ansprüche 1 bis 3, **dadurch gekennzeichnet, dass** die Rastelemente (14) derart angeordnet sind, dass sie mit der als Wärmetauscherrippe ausgebildeten, einteilig an den Heizkörper (20) angeformten Befestigungsleiste (24) verrastet sind.

5. Heizeinrichtung nach einem der Ansprüche 1 bis 4, **dadurch gekennzeichnet, dass** an die Aufnahme (11) zwei Ansätze (17) anschließen, die zueinander beabstandet sind und einen Kabelkanal (18) begrenzen, dass der Kabelkanal (18) Zugang zu einem elektrischen Anschluss des Heizkörpers (20) schafft, und dass einer oder beide Ansätze (17) einen Luftführungskanal (17.1) umschließen, der mit einem Luftführungsbereich des Heizkörpers (20) in räumlicher Verbindung steht.

6. Heizeinrichtung nach Anspruch 5, **dadurch gekennzeichnet, dass** der Kabelkanal (18) mittels einer abnehmbaren Abdeckung verschließbar ist, die mit dem Träger (10) verrastet ist.

7. Heizeinrichtung nach einem der Ansprüche 1 bis 6, **dadurch gekennzeichnet, dass** der Heizkörper (20) als Strangpressprofil mit einteilig angeformter Wärmetauscherrippe (22) ausgebildet ist, und dass der Heizkörper (20) ein Basisteil (21) mit einer Heizelementaufnahme (25) aufweist, in die ein Heizelement eingesetzt ist.

## Claims

1. A heating device for installation in a switchgear cabinet, having a support (10) and a heating body (20), wherein the support (10) replaceably accommodates the heating body (20) in a holder (11) comprising a contact surface (12) which is arranged upright between limiting elements (13) spaced apart from another, wherein one or a plurality of snap-lock elements (14) are provided in the region of the holder (11), which immobilize the heating body (20) within the holder such that the limiting elements (13) immobilize the heating body (20) in a form-fitting manner transversely to the contact surface plane,
**characterized in that**
- the limiting elements (13) are discontinuous in an end region of the contact surface (12) to form the snap-lock elements (14),
- a support (16) is arranged in the region of the holder (11) which comprises a guiding slope (16.1) inclined at an angle <90° with respect to the contact surface (12) guiding the heating body (20) into the holder (11) during assembly, and
- the holder (11) comprises a protrusion (15) engaging a recess (23) of the heating body (20) or that the snap-lock element (14) engages a recess (23) of the heating body.

2. The heating device of claim 1, **characterized in that** the holder (11) comprises an interface for heating bodies (20) of varying length which are embodied as profiled sections.

3. The heating device of claim 1 or 2, **characterized in that** the limiting elements (13) are embodied as parallel webs, the cooling body (24) abutting thereto via mounting bars formed thereon.

4. The heating device of any of claims 1 to 3, **characterized in that** the snap-lock elements (14) are arranged such that they are locked with the mounting bar (24) which is integrally formed with the heating body (20) and is embodied as a heat exchanger fin.

5. The heating device of any of claims 1 to 4, **characterized in that** two assembled bodies (17) are attached to the holder (11) which are spaced apart from another and delimit a cable duct (18), that the cable duct (18) provides access to an electrical terminal of the heating body (20) and that one or both assembled bodies (17) enclose an air duct (17.1) which is spatially connected with an air guiding region of the heating body (20).

6. The heating device of claim 5, **characterized in that** the cable duct (18) can be closed by means of a removable cover which is snap-locked to the support (10).

7. The heating device of any of claims 1 to 6, **characterized in that** the heating body (20) is embodied as extruded profile with integrally molded heat exchanger fin and that the heating body (20) comprises a base part (21) having a heating element receptacle (25) into which a heating element is inserted.

## Revendications

1. Dispositif de chauffage destiné à être monté dans une armoire de commande, avec un support (10) et un radiateur (20), le support (10) logeant le radiateur (20) de manière amovible dans un logement (11) qui comprend une surface d'appui (12), qui se trouve entre des éléments de limitation (13) écartés les uns par rapport aux autres, un ou plusieurs éléments d'encliquetage (14) étant prévus au niveau du logement (11), qui bloquent le radiateur (20) dans le logement de façon à ce que les éléments de limitation (13) fixent le radiateur (20) transversalement par rapport à la surface d'appui par complémentarité de forme,
**caractérisé en ce que**
- les éléments de limitation (13) sont interrompus à l'extrémité de la surface d'appui (12) afin de former les éléments d'encliquetage (14),
- au niveau du logement (11), se trouve un étrier (16) qui présente un chanfrein de guidage (16.1), disposé avec un angle < 90° par rapport à la surface d'appui (12), qui guide le radiateur (20) lors du montage dans le logement (11), et
- le logement (11) présente une saillie (15) qui s'emboîte dans un évidement (23) du radiateur (20) ou **en ce que** l'élément d'encliquetage (14) s'emboîte dans un évidement (23) du radiateur.

2. Dispositif de chauffage selon la revendication 1, **caractérisé en ce que** le logement (11) comprend une interface pour des radiateurs (20) de longueurs différentes et conçus comme des portions profilées.

3. Dispositif de chauffage selon la revendication 1 ou 2, **caractérisé en ce que** les éléments de limitation (13) sont conçus comme des nervures parallèles entre elles, sur lesquelles le refroidisseur (24) s'appuie avec des barres de fixation moulées.

4. Dispositif de chauffage selon l'une des revendications 1 à 3, **caractérisé en ce que** les éléments d'encliquetage (14) sont disposés de façon à ce qu'ils sont encliquetés avec la barre de fixation (24), conçue comme une nervure d'échangeur thermique et moulée d'une seule pièce sur le radiateur (20).

5. Dispositif de chauffage selon l'une des revendications 1 à 4, **caractérisé en ce que**, au logement (11), succèdent deux épaulements (17) écartés l'un de l'autre et qui délimitent un passage de câble (18), **en ce que** le passage de câble (18) donne accès à un raccordement électrique du radiateur (20) et **en ce que** un ou les deux épaulements (17) entourent un passage de guidage d'air (17.1) qui est relié de manière spatiale à une zone de guidage d'air du radiateur (20).

6. Dispositif de chauffage selon la revendication 5, **caractérisé en ce que** le passage de câble (18) peut être fermé à l'aide d'une protection amovible, qui s'encliquète avec le support (10).

7. Dispositif de chauffage selon l'une des revendications 1 à 6, **caractérisé en ce que** le radiateur (20) est conçu comme un profilé filé avec une nervure d'échangeur thermique (22) moulée d'une seule pièce et **en ce que** le radiateur (20) comprend une pièce de base (21) avec un logement d'élément de chauffage (25), dans lequel un élément chauffant est inséré.
